# EUROPÄISCHE PATENTSCHRIFT

(11) **EP 4 134 712 B1**
(45) Veröffentlichungstag und Bekanntmachung des Hinweises auf die Patenterteilung: **22.05.2024**
(21) Anmeldenummer: 21190865.2
(22) Anmeldetag: 11.08.2021
(51) Int. Cl.: G01V 3/08, G01V 13/00

(54) **VERFAHREN ZUR ÜBERPRÜFUNG DER FUNKTION EINES METALLDETEKTORS**
METHOD FOR CHECKING THE FUNCTION OF A METAL DETECTOR
PROCÉDÉ DE VÉRIFICATION DE LA FONCTIONNALITÉ D'UN DÉTECTEUR DE MÉTAUX

(43) Veröffentlichungstag der Anmeldung: 15.02.2023
(73) Patentinhaber: Sesotec GmbH, 94513 Schönberg (DE)
(72) Erfinder: Weber, Thomas, 94513 Schönberg (DE); Eichinger, Daniel, 94513 Schönberg (DE); Göstl, Karl-Heinz, 94513 Schönberg (DE); Pedersen, Doug, 94513 Schönberg (DE)
(74) Vertreter: Glück Kritzenberger Patentanwälte PartGmbB

(56) Entgegenhaltungen:
- CN-A- 106 383 371
- DE-A1- 19 954 716
- DE-T2- 69 631 850
- JP-B2- 5 174 507

## Beschreibung

### Technisches Gebiet

Die Erfindung bezieht sich auf ein Verfahren zur Überprüfung der Funktion einer Vorrichtung zur Erfassung von metallischen Fremdkörpern, umfassend wenigstens einen Metalldetektor, der einen stationären Scanbereich aufweist, der wiederum in dem Förderbereich einer Fördervorrichtung für zu untersuchende Produkte, insbesondere Lebensmittel angeordnet ist. Derartige Metalldetektoren werden insbesondere zur Lebensmittelüberwachung eingesetzt, um Produkte auszusortieren, die metallische Verunreinigungen enthalten, die eventuell während des Produktionsprozesses des Lebensmittels eingetragen wurden. Es kann sich hierbei um kleine Produkte, wie z.B. abgepackte Endware handeln, aber auch um Halbfertigprodukte in größeren Mengen, wie z.B. Säcke mit Mehl, Kartoffeln etc., die zur Herstellung von Speisen im Gastrobereich oder in der Lebensmittelindustrie Verwendung finden. Die Anwendung der Erfindung ist natürlich nicht auf den Lebensmittelbereich beschränkt, sondern umfasst alle Produkte, die auf das Vorhandensein von Metallverunreinigungen zu untersuchen sind, so z.B. Tierfutter, Überwachung von Holz- oder Kunststoffmaterialien.

### Stand der Technik

Verfahren und Vorrichtungen zum Detektieren von metallhaltigen Fremdkörpern in Produkten sind allgemein bekannt. Ein Problem dieser Verfahren besteht darin, dass die Detektionsempfindlichkeit apparatetechnischen Schwankungen unterworfen ist, die aus temperaturbedingten und/oder alterungsbedingten Detektionsabweichungen und/oder schlichtweg in Hardware- oder Softwarefehlern der Vorrichtung begründet sind. Ein Verfahren gemäß dem Oberbegriff des Anspruchs 1 ist aus der DE 199 54 716 A1 bekannt.

### Darstellung der Erfindung

Aufgabe der vorliegenden Erfindung ist es daher ein Verfahren und eine Vorrichtung zur Verfügung zu stellen, die die Nachteile des Standes der Technik überwinden und eine gleichbleibende Detektionsqualität über die Betriebszeit der Vorrichtung gewährleisten. Diese Aufgabe wird erfindungsgemäß durch ein Verfahren gemäß Anspruch 1 und eine Vorrichtung gemäß Anspruch 11 gelöst. Weitere vorteilhafte Aspekte, Details und Ausgestaltungen der Erfindung ergeben sich aus den zugehörigen abhängigen Ansprüchen, der Beschreibung sowie den Zeichnungen.

Die vorliegende Erfindung betrifft ein Verfahren zur Überprüfung der Funktion einer Vorrichtung zur Erfassung von metallischen Fremdkörpern, umfassend wenigstens einen Metalldetektor, wie es oben gattungsgemäß beschrieben worden ist. Der Metalldetektor weist einen stationären Scanbereich auf, der wiederum in dem Förderbereich einer Fördervorrichtung für zu untersuchende Produkte, insbesondere Lebensmittel angeordnet ist. Die Vorrichtung weist eine Auswerteeinheit für die Signale des Metalldetektors auf. Erfindungsgemäß wird in dem Verfahren das Vorliegen der Produkte im Scan- und/oder Förderbereich erfasst, um den Metalldetektor von einem Arbeitsmodus in einen Prüfmodus umzuschalten, wenn sich kein Produkt im Scan/Förderbereich befindet.

Erfindungsgemäß wird im Prüfmodus von einem Impulsgeber ein Triggerimpuls im Scanbereich abgegeben, welcher Triggerimpuls im Metalldetektor ein Antwortsignal hervorruft. Das Antwortsignal und/oder ein daraus abgeleitetes Auswertesignal der Auswerteeinheit wird nun mit einem Referenzbereich verglichen und aus dem Vergleich wird ein Fehlersignal und/oder eine Aktion abgeleitet, wenn das Antwort/Auswertesignal aus dem Referenzbereich herausfällt.

Als Antwortsignal kann zum einen allein die Impulsantwort des Metalldetektors verwendet werden, so dass man ein erstes Beurteilungskriterium hat, ob der Metalldetektor selbst korrekt arbeitet, was der Fall ist, wenn das Antwortsignal im Referenzbereich liegt.

Zusätzlich oder alternativ zu dem Antwortsignal kann ein daraus abgeleitetes Auswertesignal der Auswerteeinheit mit einem Referenzbereich vergleichen werden, in welchem Fall Defekte in Elektronik-Modulen der Detektionsvorrichtung erfasst werden können.

Vorzugsweise wird das Auswertesignal der Auswerteeinheit erst dann verglichen, nachdem das reine Antwortsignal des Metalldetektors verglichen worden ist, um die ordnungsgemäße Funktion des Metalldetektors sicherzustellen. Wenn daraufhin im Auswertesignal eine unzulässige Abweichung (Unter/Überschreitung des Referenzbereichs) vorliegt, kann man auf einen Defekt in der Hardware schließen.

Vorzugsweise wird als Triggerimpuls ein Rechteckimpuls verwendet, welcher sich gut reproduzierbar erzeugen lässt und welcher ein klar definiertes Antwortsignal des Metalldetektors hervorruft. Auf diese Weise wird ein klar definiertes Testsignal verwendet, was die Reproduzierbarkeit und damit die Zuverlässigkeit des Test verbessert.

Vorzugsweise liegt hierbei die Amplitude des Triggerimpulses über der Erfassungsgrenze des Metalldetektors, insbesondere deutlich (mindestens 50%) darüber. Vorzugsweise liegt die Amplitude in dem Wertebereich der Antwortsignale, die durch einen repräsentativen Metallfremdkörper in dem Metalldetektor hervorgerufen wird.

Um die Zuverlässigkeit des Prüfverfahrens zu verbessern, wird das Antwortsignal des Metalldetektors vorzugsweise bei wenigstens zwei unterschiedlichen Detektionsfrequenzen überprüft. Das Fehlersignal und/oder die Aktion wird entsprechend dann eingeleitet, wenn das Antwortsignal in wenigstens einer der beiden Detektionsfrequenzen aus dem Referenzbereich herausfällt.

In einer vorteilhaften Ausführungsform der Erfindung wird das Antwortsignal des Metalldetektors bei wenigstens zwei unterschiedlichen Auswertungsverfahren überprüft. Das Fehlersignal und/oder die Fehleraktion wird entsprechend dann abgeleitet, wenn das Antwortsignal in wenigstens einem der beiden Auswertungsverfahren aus dem Referenzbereich herausfällt. Auch hierdurch wird eine Art redundanten Tests geschaffen, welcher es erlaubt, einen Fehler der Auswerteeinheit in einem Auswerteverfahren sofort zu erkennen. Hier kann beispielsweise ein Hardware-Modul des Detektors oder der Auswerteeinheit ausgetauscht werden. Nach der Aktion kann dann im Prüfmodus ein erneuter Test gestartet werden, der die Behebung des Fehlers nach der Aktion verifiziert, wonach die Vorrichtung wieder in den Betrieb gehen kann.

In einer Ausführungsform kann die Aktivierung des Prüfmodus in Abhängigkeit von der Tätigkeit der Fördervorrichtung erfolgen. Auch kann die Nicht-Aktivierung des Arbeitsmodus, z.B. nach einem Reset oder Neustart der Vorrichtung für eine automatische Aktivierung des Prüfmodus verwendet werden.

Auf jeden Fall ist sicher zu stellen, dass während des Prüfmodus kein Produkt in den Scanbereich gelangt, was einfach z.B. über eine Abschaltung der Fördervorrichtung während des Prüfmodus erreicht werden kann.

So kann in einer vorteilhaften Ausführungsform der Erfindung die Aktivierung des Prüfmodus in Abhängigkeit von dem Signal eines im Bereich der Fördervorrichtung angeordneten Sensors erfolgen, durch welchen die Anordnung eines Produktes auf der Fördervorrichtung erkannt wird.

In einer sehr einfachen Ausführungsform der Erfindung kann der Prüfmodus in Abhängigkeit vom Produktsignal aktiviert werden, d.h. bei Nichtvorliegen eines Produktsignals. Hierfür kann vorzugsweise eine Produkterkennungslogik eingesetzt werden. So werden die Produkte üblicherweise über eine Vereinzelungsvorrichtung auf die Fördervorrichtung aufgegeben, so dass ein definierter Mindestabstand zwischen den auf der Fördervorrichtung transportierten Produkten vorliegt, welcher mit einer definierten Zeitspanne einhergeht, die Produkterkennungslogik kann diese Zeitspanne erfassen und den Prüfmodus so aktiveren, dass der Prüfmodus ordnungsgemäß innerhalb der Zeitspanne, in der kein Produkt im Scanbereich zu erwarten ist, abgeschlossen ist. Wenn das Produkt nach der Durchführung der Prüfung mittels der Fördervorrichtung in den Scanbereich gelangt, hat die Vorrichtung wieder in den Arbeitsmodus zurückgeschaltet.

Vorzugsweise kann in zeitlichen Abständen von 1 bis 5 Minuten in den Prüfmodus umgeschaltet werden, was eine kontinuierliche Überwachung der Hard- und Software bzw. Auswerteeinheit der Vorrichtung erlaubt.

Vorzugsweise schaltet der Metalldetektor nach Beendigung des Prüfmodus selbsttätig wieder in den Arbeitsmodus zurück, was die Verkürzung des Prüfmodus auf die notwendige Prüfzeit ermöglicht und zudem kein manuelles Eingreifen seitens des Bedienpersonals erfordert.

Vorzugsweise umfasst die Aktion eine Überprüfung der Detektionsleistung des Metalldetektors, um so sicherzustellen, dass dieser nicht z.B. altersbedingt oder situationsbedingt signifikant in seiner Detektionsleistung absinkt. Dies kann durch Vergleich mit einer Referenzleistung verifiziert werden.

Die Erfindung betrifft ebenfalls eine Vorrichtung zur Erfassung von metallhaltigen Fremdkörpern in Produkten, umfassend:
- einen Metalldetektor, der einen stationären Scanbereich aufweist, der wiederum in dem Förderbereich einer Fördervorrichtung für die zu untersuchenden Produkte angeordnet ist,
- eine Steuerung für den Metalldetektor, welche Steuerung eine Auswerteeinheit für den Metalldetektor aufweist, welche Steuerung einen Arbeitsmodus zur Erkennung von Fremdkörpern in den Produkten und einen Prüfmodus zur Überprüfung des Metalldetektors und/oder der Auswerteeinheit aufweist,
- einen Sensor für die Tätigkeit der Fördervorrichtung und/oder für die Erkennung der Produkte auf der Fördervorrichtung und/oder im Scanbereich des Metalldetektors, und
- wenigstens einen im Scanbereich des Metalldetektors angeordneten Impulsgeber für ein Triggersignal.

Erfindungsgemäß hat die Steuerung eine Aktivierungsschaltung zur Umschaltung von dem Arbeitsmodus in den Prüfmodus, die in Abhängigkeit von dem Signal des Sensors aktivierbar ist. Die Steuerung ist ausgebildet, im Prüfmodus den Impulsgeber zur Abgabe des Triggerimpuls zu aktivieren und das Antwortsignal des Metalldetektors auf den Triggerimpuls und/oder ein daraus abgeleitetes Auswertesignal der Auswerteeinheit auszulesen und in einer Vergleichsschaltung der Steuerung mit einem Referenzbereich zu vergleichen,
und welche Steuerung eine Alarmschaltung aufweist, die aus dem Vergleich ein Fehlersignal und/oder eine Fehleraktion ableitet, wenn das Antwort/Auswertesignal aus dem Referenzbereich herausfällt.

im Prüfmodus kann dann verifiziert werden, ob der Metalldetektor und vorzugsweise auch die Auswerteeinheit ordnungsgemäß arbeiten. Eine darauf abgeleitete Fehleraktion kann zum Beispiel die Anforderung einer Wartung, ein Zurücksetzen der Steuerung und/oder Auswerteeinheit und/oder eine sofortige Blockade des Arbeitsmodus umfassen, so dass mit dem Feststellen eines Fehlers keine weiteren Produkte mehr getestet werden können.

Vorzugsweise weist die Steuerung eine Rücksetzschaltung auf, die den Metalldetektor wieder in den Arbeitsmodus zurücksetzt, wenn der Prüfmodus fehlerlos beendet wurde, d.h. wenn das Antwortsignal des Metalldetektors und/oder das Auswertesignal der Auswerteeinheit im Referenzbereich lagen und somit kein Fehlersignal oder eine Fehleraktion eingeleitet wurden.

In einer einfach zu realisierenden Ausführungsform der Erfindung überwacht der Sensor die Tätigkeit der Fördervorrichtung. Der Prüfmodus kann somit dann gestartet werden, wenn die Fördervorrichtung steht.

Alternativ kann der Sensor die Anordnung von Produkten auf der Fördervorrichtung und/oder im Scanbereich detektieren und damit die Basis für die Umschaltung zwischen Prüfmodus und Arbeitsmodus bilden.

Folgende Ausdrücke werden synonym verwendet: Vorrichtung zur Erfassung von metallhaltigen Fremdkörpern in Produkten - Erfassungsvorrichtung - Vorrichtung; Auswerteeinheit - Software der Vorrichtung; Aktion - Fehleraktion; Schlechtprodukt - Produkt, bei dem ein unzulässiger Metallgehalt detektiert wurde; Triggerimpuls - Triggersignal;

### Kurze Beschreibung der Zeichnungen

Die Erfindung soll nachfolgend anhand von Ausführungsbeispielen im Zusammenhang mit den Zeichnungen näher erläutert werden. In diesen zeigen
- Fig. 1: eine schematische Darstellung einer erfindungsgemäßen Vorrichtung zur Erfassung von metallhaltigen Fremdkörpern in Produkten;
- Fig. 2: ein Amplitude/Zeit-Diagramm eines Triggerimpulses des Impulsgebers, des Antwortsignals des Metalldetektors und der Auswertesignale der Auswerteeinheit.

### Wege zur Ausführung der Erfindung

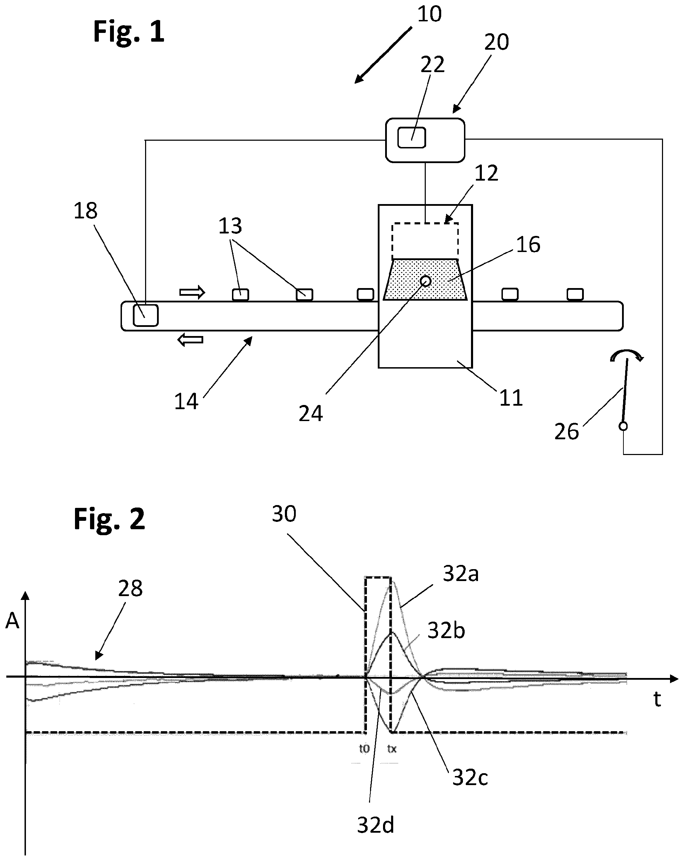

Fig. 1 zeigt eine Vorrichtung 10 zur Erfassung von metallhaltigen Fremdkörpern in Produkten, umfassend einen in einem Gehäuse 11 angeordneten Metalldetektor 12. Das Gehäuse überspannt eine unterhalb des Metalldetektors 12 verlaufende Fördervorrichtung 14, welche durch das Gehäuse läuft und als Förderband ausgebildet ist. Zwischen dem Metalldetektor 12 und dem Förderband 14 erstreckt sich innerhalb des Gehäuses 11 ein Scanbereich 16, den auf der Fördervorrichtung 14 liegende Produkte 13 durchlaufen, um so auf das Vorhandensein metallhaltiger Fremdkörper untersucht zu werden.

Die Fördervorrichtung 14 umfasst einen Antrieb 18, der von einer Steuerung 20 angesteuert wird. Die Steuerung 20 steuert auch die Tätigkeit des Metalldetektors 12 und umfasst eine Auswerteeinheit 22 zur Auswertung der von dem Metalldetektor 12 beim Durchlaufen der Produkte 13 detektierten Signale. Der Metalldetektor detektiert in einem Betriebsmodus, ob die mit der Fördervorrichtung durch den Scanbereich 16 laufenden Produkte 13 einen Metallgehalt aufweisen, der einen zulässigen Grenzwert überschreitet, in welchem Fall sie als Schlechtprodukte klassifiziert werden. In diesem Fall betätigt die Steuerung 20 zu gegebener Zeit (die Restlaufzeit des Produkts 13 auf dem Förderband 14 ist zu berücksichtigen) ein schwenkbares Abweisgatter 26, mit welchem das Schlechtprodukt aussortiert bzw. abgesondert wird.

Die Steuerung 20 ist ausgebildet, insbesondere in festen zeitlichen Abständen von 1 Min. bis zu 10 Min. einen Prüfmodus einzuschalten, wenn sich gerade kein Produkt 13 im Scanbereich 16 befindet, was dadurch festgestellt werden kann, ob noch ein Produktsignal 28 (Fig. 2) vorliegt, oder ob dies bereits vollständig abgeebbt ist. Im Prüfmodus veranlasst die Steuerung 20 den Impulsgeber 24, in dem Scanbereich 16 einen Triggerimpuls 30 zu generieren, der von dem Metalldetektor 12 erfasst wird und zu mindestens einem Antwortsignal 32a-d des Metalldetektors 12 führt. Das Antwortsignal 32a-d kann wiederum der Auswerteeinheit 22 zugeführt werden, welche daraus ein Auswertesignal ableitet.

Das Antwortsignal 32a-d und/oder das Auswertesignal werden mit Referenzsignalen verglichen und daraus wird abgeleitet, ob der Metalldetektor 12 und/oder eventuell die Auswerteeinheit 22 ordnungsgemäß funktionieren. Wenn dies nicht der Fall ist, wird ein optisches und/oder akustisches Fehlersignal generiert und die Rückschaltung der Erfassungsvorrichtung 10 in den Betriebsmodus wird verhindert. Damit können mit der fehlerhaften Anlage keine weiteren Produkte untersucht werden.

Der Triggerimpuls 30 und daraus resultierende verschiedene Antwortsignale 32a-d des Metalldetektors 12 sind beispielsweise in dem Amplitude/Zeit-Diagramm der Fig. 2 dargestellt.

Die Steuerung 20 erfasst das Auftreten eines Produktsignals 28 und kann das Abebben des Produktsignals als Zeitpunkt t0 zum Abgeben eines Triggersignals 30 setzen, was vermeidet, dass das Triggersignal 30 vom Produktsignal 28 überlagert wird. Das Triggersignal 30 ist in diesem Fall ein Rechteckimpuls, der zum Zeitpunkt tx endet.

Im vorliegenden Fall arbeitet der Metalldetektor 12 mit zwei Frequenzen und es werden zu jeder Frequenz jeweils die Amplituden-und Phasensignale ermittelt. Auf diese Weise werden vier Antwortsignale 32 a-d basierend auf unterschiedlichen Frequenzen und Phasenverschiebungen des Metalldetektors 12 erhalten. Diese können einzeln mit entsprechenden Referenzwerten verglichen werden, um beurteilen zu können, ob das Antwortsignal 32a-d, d.h. seine Amplitude, eventuell auch deren Zeitpunkt, im erwarteten Rahmen liegt/liegen. Auf diese Weise können alters- oder system- bzw. umweltbedingte Abweichungen des wenigstens einen Antwortsignals 32a-d von einem Referenz- oder Sollwert erfasst werden, was als Fehleraktion zu einem sofortigen Stopp der Erfassungsvorrichtung führen kann. Die Detektionszuverlässigkeit der Erfassungsvorrichtung 10 wird somit durch die Erfindung deutlich erhöht.

### Bezugszeichenliste

- 10: Vorrichtung zur Erfassung von metallhaltigen Fremdkörpern in Produkten
- 12: Metalldetektor
- 13: Produkt
- 14: Fördervorrichtung
- 16: Scanbereich des Metalldetektors
- 18: Antrieb der Fördervorrichtung
- 20: Steuerung des Metalldetektors und des Antriebs der Fördervorrichtung
- 22: Auswerteeinheit
- 24: Impulsgeber im Scanbereich des Metalldetektors
- 26: Abweisgatter für Schlechtprodukte
- 28: Produktsignal
- 30: Triggerimpuls des Impulsgebers; Triggersignal
- 32a-d: Antwortsignale des Metalldetektors auf den Triggerimpuls bei zwei unterschiedlichen Frequenzen und zwei unterschiedlichen Phasenverschiebungen relativ zum Triggersignal
- t0: Zeitpunkt der Abgabe des Triggerimpulses
- tx: Ende des Triggerimpulses

## Patentansprüche

1. Verfahren zur Überprüfung der Funktion einer Vorrichtung (10) zur Erfassung von metallischen Fremdkörpern in Produkten (13), umfassend wenigstens einen Metalldetektor (12), der einen stationären Scanbereich (16) aufweist, der wiederum in dem Förderbereich einer Fördervorrichtung (14) für zu untersuchende Produkte, insbesondere Lebensmittel angeordnet ist, welche Vorrichtung (10) eine Auswerteeinheit (22) für die Signale des Metalldetektors (12) aufweist, wobei in einem Prüfmodus von einem Impulsgeber (24) ein Triggerimpuls (30) im Scanbereich (16) abgegeben wird, welcher Triggerimpuls (30) im Metalldetektor (12) ein Antwortsignal (32a-d) hervorruft, wobei das Antwortsignal (32a-d) und/oder ein daraus abgeleitetes Auswertesignal der Auswerteeinheit (22) mit einem Referenzbereich verglichen wird und aus dem Vergleich ein Signal und/oder eine Aktion abgeleitet wird, wenn das Antwort/Auswertesignal (32a-d) aus dem Referenzbereich herausfällt,
**dadurch gekennzeichnet,**
**dass** in dem Verfahren das Vorliegen der Produkte im Scan- und/oder Förderbereich (16) erfasst wird, und der Metalldetektor (12) von einem Arbeitsmodus in den Prüfmodus umgeschaltet wird, wenn sich kein Produkt im Scanbereich (16) befindet.

2. Verfahren nach Anspruch 1, **dadurch gekennzeichnet, dass** als Triggerimpuls (30) ein Rechteckimpuls verwendet wird.

3. Verfahren nach einem der vorhergehenden Ansprüche, **dadurch gekennzeichnet, dass** das Antwortsignal (32a-d) des Metalldetektors (12) bei wenigstens zwei unterschiedlichen Detektionsfrequenzen überprüft wird, und dass das Signal und/oder die Aktion abgeleitet wird, wenn das Antwortsignal (32a-d) in wenigstens einer der beiden Detektionsfrequenzen aus dem Referenzbereich herausfällt.

4. Verfahren nach einem der vorhergehenden Ansprüche, **dadurch gekennzeichnet, dass** das Antwortsignal (32a-d) des Metalldetektors (12) bei wenigstens zwei unterschiedlichen Auswerteverfahren überprüft wird, und dass das Fehlersignal und/oder die Fehleraktion abgeleitet wird, wenn das Antwortsignal (32a-d) in wenigstens einem der beiden Auswertungsverfahren aus dem Referenzbereich herausfällt.

5. Verfahren nach einem der vorhergehenden Ansprüche, **dadurch gekennzeichnet, dass** die Aktivierung des Prüfmodus in Abhängigkeit von der Tätigkeit der Fördervorrichtung (14) erfolgt.

6. Verfahren nach einem der vorhergehenden Ansprüche, **dadurch gekennzeichnet, dass** die Aktivierung des Prüfmodus in Abhängigkeit von dem Signal eines im Bereich der Fördervorrichtung (14) angeordneten Sensors erfolgt, durch welchen die Anordnung eines Produktes auf der Fördervorrichtung (14) erkannt wird.

7. Verfahren nach einem der vorhergehenden Ansprüche, **dadurch gekennzeichnet, dass** der Prüfmodus in Abhängigkeit vom Produktsignal aktiviert wird.

8. Verfahren nach einem der vorhergehenden Ansprüche, **dadurch gekennzeichnet, dass** in zeitlichen Abständen von 1 bis 5 Minuten in den Prüfmodus umgeschaltet wird.

9. Verfahren nach einem der vorhergehenden Ansprüche, **dadurch gekennzeichnet, dass** der Metalldetektor von dem Prüfungsmodus nach Beendigung des Prüfmodus selbsttätig wieder in den Arbeitsmodus zurückschaltet.

10. Verfahren nach einem der vorhergehenden Ansprüche, **dadurch gekennzeichnet, dass** die Aktion eine Überprüfung der Detektionsleistung des Metalldetektors (12) umfasst.

11. Vorrichtung (10) zur Erfassung von metallhaltigen Fremdkörpern in Produkten, umfassend:
- einen Metalldetektor (12), der einen stationären Scanbereich (16) aufweist, der wiederum in dem Förderbereich einer Fördervorrichtung (14) für die zu untersuchenden Produkte angeordnet ist,
- eine Steuerung für den Metalldetektor (12), welche Steuerung eine Auswerteeinheit (22) für den Metalldetektor (12) aufweist, und welche Steuerung einen Arbeitsmodus zur Erkennung von Fremdkörpern in den Produkten und einen Prüfmodus zur Überprüfung des Metalldetektors (12) und/oder der Auswerteeinheit (22) aufweist,- wenigstens einen im Scanbereich (16) des Metalldetektors (12) angeordneten Impulsgeber für die Abgabe eines Triggersignals (30),
wobei die Steuerung ausgebildet ist, im Prüfmodus den Impulsgeber zur Abgabe des Triggerimpuls (30) zu aktivieren und das Antwortsignal (32a-d) des Metalldetektors (12) auf den Triggerimpuls (30) und/oder ein daraus abgeleitetes Auswertesignal der Auswerteeinheit (22) auszulesen und in einer Vergleichsschaltung der Steuerung mit einem Referenzbereich zu vergleichen,
und welche Steuerung eine Alarmschaltung aufweist, die aus dem Vergleich ein Fehlersignal und/oder eine Fehleraktion ableitet, wenn das Antwort/Auswertesignal (32a-d) aus dem Referenzbereich herausfällt, **dadurch gekennzeichnet, dass** die Vorrichtung einen Sensor für die Tätigkeit der Fördervorrichtung (14) und/oder für die Erkennung der Produkte auf der Fördervorrichtung (14) und/oder im Scanbereich (16) des Metalldetektors (12) aufweist,
und dass die Steuerung eine Aktivierungsschaltung zur Umschaltung von dem Arbeitsmodus in den Prüfmodus aufweist, die in Abhängigkeit von dem Signal des Sensors aktivierbar ist.

12. Vorrichtung (10) nach Anspruch 11, in welchem die Steuerung eine Rücksetzschaltung aufweist, die den Metalldetektor (12) wieder in den Arbeitsmodus zurücksetzt, wenn der Prüfmodus fehlerlos beendet wurde.

13. Vorrichtung (10) nach Anspruch 11 oder 12, **dadurch gekennzeichnet, dass** der Sensor die Tätigkeit der Fördervorrichtung (14) überwacht.

14. Vorrichtung (10) nach Anspruch 11 oder 12, **dadurch gekennzeichnet, dass** der Sensor die Anordnung von Produkten auf der Fördervorrichtung (14) und/oder im Scanbereich (16) detektiert.

## Claims

1. Method for checking the function of a device (10) for detecting metallic impurities in products (13), comprising at least one metal detector (12) which has a stationary scanning region (16) which in turn is arranged in the conveying region of a conveying device (14) for products to be examined, in particular foodstuffs, which device (10) has an evaluation unit (22) for the signals of the metal detector (12), wherein in a inspection mode a trigger pulse (30) is emitted by a pulse generator (24) in the scanning area (16), which trigger pulse (30) causes a response signal (32a-d) in the metal detector (12), wherein the response signal (32a-d) and/or an evaluation signal of the evaluation unit (22) derived therefrom is compared with a reference range and a signal and/or an action is derived from the comparison if the response/evaluation signal (32a-d) falls out of the reference range,
**characterized in that**
the presence of the products in the scanning and/or conveying area (16) is detected in the method, and the metal detector (12) is switched from a operating mode to the inspection mode if there is no product in the scanning area (16).

2. Method according to claim 1, **characterized in that** a square-wave pulse is used as the trigger pulse (30).

3. Method according to one of the preceding claims, **characterized in that** the response signal (32a-d) of the metal detector (12) is checked at at least two different detection frequencies, and **in that** the signal and/or the action is derived when the response signal (32a-d) falls out of the reference range in at least one of the two detection frequencies.

4. Method according to one of the preceding claims, **characterized in that** the response signal (32a-d) of the metal detector (12) is checked via at least two different evaluation methods, and **in that** the error signal and/or the error action is derived when the response signal (32a-d) falls out of the reference range in at least one of the two evaluation methods.

5. Method according to one of the preceding claims, **characterized in that** the activation of the inspection mode takes place as a function of the activity of the conveyor device (14).

6. Method according to one of the preceding claims, **characterized in that** the activation of the inspection mode takes place as a function of the signal of a sensor arranged in the region of the conveyor device (14), by means of which the arrangement of a product on the conveyor device (14) is detected.

7. Method according to one of the preceding claims, **characterized in that** the inspection mode is activated as a function of the product signal.

8. Method according to one of the preceding claims, **characterized in that** the inspection mode is activated at time intervals of 1 to 5 minutes.

9. Method according to one of the preceding claims, **characterized in that** the metal detector automatically switches back from the inspection mode to the operating mode after the end of the inspection mode.

10. Method according to one of the preceding claims, **characterized in that** the action comprises a check of the detection performance of the metal detector (12).

11. Device (10) for detecting metal-containing foreign bodies in products, comprising:
- a metal detector (12) having a stationary scanning area (16), which in turn is arranged in the conveying area of a conveying device (14) for the products to be examined,
- a controller for the metal detector (12), which controller has an evaluation unit (22) for the metal detector (12), and which controller has an operating mode for detecting foreign bodies in the products and a inspection mode for checking the metal detector (12) and/or the evaluation unit (22),
- at least one pulse generator arranged in the scanning area (16) of the metal detector (12) for emitting a trigger signal (30),
wherein the controller is designed to activate the pulse generator for emitting the trigger pulse (30) in the inspection mode and to read out the response signal (32a-d) of the metal detector (12) to the trigger pulse (30) and/or an evaluation signal of the evaluation unit (22) derived therefrom and to compare it with a reference range in a comparison circuit of the controller,
and which controller has an alarm circuit which derives an error signal and/or an error action from the comparison and/or an error action if the response/evaluation signal (32a-d) falls outside the reference range, **characterized in that** the device has a sensor for the activity of the conveyor device (14) and/or for the detection of the products on the conveyor device (14) and/or in the scanning area (16) of the metal detector (12),
and **in that** the controller has an activation circuit for switching from the operating mode to the inspection mode, which can be activated as a function of the signal from the sensor.

12. Device (10) according to claim 11, in which the controller has a reset circuit which resets the metal detector (12) back to the operating mode when the inspection mode has been terminated without error.

13. Device (10) according to claim 11 or 12, **characterized in that** the sensor monitors the activity of the conveyor device (14).

14. Device (10) according to claim 11 or 12, **characterized in that** the sensor the arrangement of products on the conveyor device (14) and/or in the scanning area (16) detected.

## Revendications

1. Procédé de vérification de la fonctionnalité d'un dispositif (10) de détection de corps étrangers métalliques dans des produits (13), comprenant au moins un détecteur de métaux (12) comportant une zone de balayage fixe (16) qui est elle-même disposée dans la zone de convoyage d'un dispositif de convoyage (14) pour des produits à examiner, en particulier des denrées alimentaires, lequel dispositif (10) comporte une unité d'évaluation (22) pour les signaux du détecteur de métaux (12), dans lequel une impulsion de déclenchement (30) est émise à partir d'un générateur d'impulsions (24) dans la zone de balayage (16) dans un mode de vérfication, laquelle impulsion de déclenchement (30) engendre un signal de réponse (32a-d) dans le détecteur de métaux (12), dans lequel le signal de réponse (32a-d) et/ou un signal d'évaluation de l'unité d'évaluation (22) déduit de celui-ci sont comparés à une plage de référence et un signal et/ou une action sont déduits de la comparaison lorsque le signal de réponse/d'évaluation (32a-d) sort de la plage de référence,
**caractérisé en ce que**,
dans le procédé, la présence des produits dans la zone de balayage et/ou de convoyage (16) est détectée et le détecteur de métaux (12) est basculé d'un mode de travail en mode de vérfication lorsqu'aucun produit ne se trouve dans la zone de balayage (16).

2. Procédé selon la revendication 1, **caractérisé en ce qu'**une impulsion rectangulaire est utilisée comme impulsion de déclenchement (30).

3. Procédé selon l'une des revendications précédentes, **caractérisé en ce que** le signal de réponse (32a-d) du détecteur de métaux (12) est contrôlé à au moins deux fréquences de détection différentes, et **en ce que** le signal et/ou l'action est déduit lorsque le signal de réponse (32a-d) à au moins l'une des deux fréquences de détection sort de la plage de référence.

4. Procédé selon l'une des revendications précédentes, **caractérisé en ce que** le signal de réponse (32a-d) du détecteur de métaux (12) est contrôlé dans au moins deux procédés d'évaluation différents, et **en ce que** le signal d'erreur et/ou l'action d'erreur est déduit lorsque le signal de réponse (32a-d) dans au moins l'un des deux procédés d'évaluation sort de la plage de référence.

5. Procédé selon l'une des revendications précédentes, **caractérisé en ce que** l'activation du mode de vérfication est effectuée en fonction de l'activité du dispositif de convoyage (14).

6. Procédé selon l'une des revendications précédentes, **caractérisé en ce que** l'activation du mode de vérfication est effectuée en fonction du signal d'un capteur disposé dans la zone du dispositif de convoyage (14), au moyen duquel la disposition d'un produit sur le dispositif de convoyage (14) est identifiée.

7. Procédé selon l'une des revendications précédentes, **caractérisé en ce que** le mode de vérfication est activé en fonction du signal de produit.

8. Procédé selon l'une des revendications précédentes, **caractérisé en ce que** le basculement en mode de vérfication est effectué à des intervalles de temps de 1 à 5 minutes.

9. Procédé selon l'une des revendications précédentes, **caractérisé en ce que** le détecteur de métaux repasse automatiquement du mode de vérfication en mode de travail après la fin du mode de vérfication.

10. Procédé selon l'une des revendications précédentes, **caractérisé en ce que** l'action comprend un contrôle de la capacité de détection du détecteur de métaux (12).

11. Dispositif (10) de détection de corps étrangers contenant des métaux dans des produits, comprenant :
- un détecteur de métaux (12) comportant une zone de balayage fixe (16), elle-même disposée dans la zone de convoyage d'un dispositif de convoyage (14) pour les produits à examiner,
- une commande pour le détecteur de métaux (12), laquelle commande comporte une unité d'évaluation (22) pour le détecteur de métaux (12) et laquelle commande comporte un mode de travail pour détecter des corps étrangers dans les produits et un mode de vérfication pour contrôler le détecteur de métaux (12) et/ou l'unité d'évaluation (22),
- au moins un générateur d'impulsions disposé dans la zone de balayage (16) du détecteur de métaux (12) pour l'émission d'un signal de déclenchement (30),
dans lequel la commande est configurée pour activer le générateur d'impulsions en mode de vérfication pour émettre l'impulsion de déclenchement (30) et pour lire le signal de réponse (32a-d) du détecteur de métaux (12) à l'impulsion de déclenchement (30) et/ou un signal d'évaluation de l'unité d'évaluation (22) dérivé de celui-ci et pour le comparer avec une plage de référence dans un circuit de comparaison de la commande,
et laquelle commande comporte un circuit d'alarme qui déduit un signal d'erreur et/ou une action d'erreur à partir de la comparaison, lorsque le signal de réponse/d'évaluation (32a-d) sort de la plage de référence, **caractérisé en ce que** le dispositif comporte un capteur pour l'activité du dispositif de convoyage (14) et/ou pour l'identification des produits sur le dispositif de convoyage (14) et/ou dans la zone de balayage (16) du détecteur de métaux (12), et **en ce que** la commande comporte un circuit d'activation pour basculer du mode de travail en mode de vérfication, qui peut être activé en fonction du signal du capteur.

12. Dispositif (10) selon la revendication 11, dans lequel la commande comporte un circuit de réinitialisation qui remet le détecteur de métaux (12) en mode de travail lorsque le mode de vérfication s'est terminé sans erreur.

13. Dispositif (10) selon la revendication 11 ou 12, **caractérisé en ce que** le capteur surveille l'activité du dispositif de convoyage (14).

14. Dispositif (10) selon la revendication 11 ou 12, **caractérisé en ce que** le capteur détecte la disposition des produits sur le dispositif de convoyage (14) et/ou dans la zone de balayage (16).
